# EUROPEAN PATENT APPLICATION

(11) **EP 2 441 741 A1**
(43) Date of publication of application: **18.04.2012**
(21) Application number: 11184305.8
(22) Date of filing: 07.10.2011
(51) Int. Cl.: C04B 37/00, C04B 38/00, C04B 41/00, C04B 41/45, C04B 41/50, F01N 3/022, C04B 35/565

(54) **Honeycomb structured body and exhaust gas purifying apparatus**

(30) Priority: 13.10.2010 JP 2010230193
(71) Applicant: Ibiden Co., Ltd., Ogaki-shi Gifu 503-8604 (JP)
(72) Inventor: Iwakura, Misako, Gifu, 501-0695 (JP); Ota, Kohei, Gifu, 501-0695 (JP); Ito, Toshihide, Gifu, 501-0695 (JP)
(74) Representative: HOFFMANN EITLE

(57) **Abstract**

A honeycomb structured body includes: a porous silicon carbide honeycomb fired body in which a large number of cells are longitudinally disposed in parallel with one another with a cell wall interposed therebetween, wherein a silicon-containing oxide layer is formed on a surface of silicon carbide particles in the silicon carbide honeycomb fired body, and the oxide layer has a thickness of 5 to 100 nm when measured with an X-ray photoelectron spectroscopy (XPS).

## Description

### TECHNICAL FIELD

The present invention relates to a honeycomb structured body and an exhaust gas purifying apparatus.

### BACKGROUND ART

In recent years, particulates (hereinafter, also referred to as "PM") such as soot and other toxic components contained in exhaust gases discharged from internal combustion engines of vehicles such as buses and trucks, construction machines, or the like have raised serious problems as contaminants harmful to the environment and the human body. For this reason, various honeycomb structured bodies made of porous ceramics have been proposed as honeycomb filters to capture PM in exhaust gases and purify the exhaust gases and also as catalyst supporting carriers to convert toxic components in exhaust gases by allowing the exhaust gases to pass through the inside of the catalyst supporting carriers.

Patent Document 1 discloses a honeycomb filter including a silica film (silica layer) in a porous silicon carbide sintered body as a honeycomb filter including such a honeycomb structured body. Patent Document 1 discloses that a silica film for an increase in strength is formed on the inner surface of pores of the porous silicon carbide sintered body, and the porous silicon carbide sintered body including the silica film has an oxygen concentration of 1 to 10% by weight.

Patent Document 1 discloses a conventional honeycomb filter obtained by heating a porous silicon carbide sintered body in an air atmosphere at 800°C to 1600°C over 5 to 100 hours and forming an oxide layerhaving an oxygen concentration of 1 to 10% by weight has a breaking strength of 1.11 to 1.57 times as high as that of the aforementioned honeycomb filter without heating treatment.

Patent Document 1:J-P-A 2000-218165

### SUMMARY OF THE INVENTION

### PROBLEMS TO BE SOLVED BY THE INVENTION

In the case where the conventional honeycomb filter disclosed in Patent Document 1 is used as a filter for an exhaust gas purifying apparatus such as a vehicle provided with a diesel engine, PM containing soot is captured and deposited in a honeycomb filter in use.

Soot deposited in this honeycomb filter is burned and removed by increasing the temperature of exhaust gases. Since the temperature of the honeycomb filter rises rapidly when soot is burned, thermal shock causes a high thermal stress in the honeycomb filter. Particularly in the case where soot is deposited in a large amount on the entire filter, soot is locally deposited in a filter or the like, soot generates an unusual amount of heat upon burning of soot, and an exhaust gas filter has a temperature of 1500°C or more, for example. Therefore, problematically, a larger thermal stress tends to be generated in the exhaust gas filter, and cracks tend to occur in the honeycomb filter.

The present invention has been made in order to solve the above problems, and has its object to provide: an honeycomb structured body that tends not to cause cracks even in the case where thermal shock occurs in the honeycomb structured body, for example, in the case where the temperature of the honeycomb structured body rises rapidly; and an exhaust gas purifying apparatus using the honeycomb structured body of the present invention.

### MEANS FOR SOLVING THE PROBLEMS

A honeycomb structured body according to claim 1 includes:a porous silicon carbide honeycomb fired body in which a large number of cells are longitudinally disposed in parallel with one another with a cell wall interposed therebetween,whereina silicon-containing oxide layer is formed on a surface of silicon carbide particles in the silicon carbide honeycomb fired body, and the oxide layer has a thickness of 5 to 100 nm when measured with an X-ray photoelectron spectroscopy (XPS).

According to the honeycomb structured body according to claim 1, the thickness of the oxide layer formed on the surface of the silicon carbide of the honeycomb structured body is adjusted to 5 to 100 nm. Therefore, the ratio of the thickness of the oxide formed on the surface the honeycomb fired body to the thickness of a basic material of the honeycomb fired body (honeycomb fired body without an oxide layer)can be kept low. Therefore, when soot deposited on the honeycomb structured body is burned, the stress does not become large due to the difference in the coefficients of thermal expansion of the silicon carbide, which is a basic materials of the honeycomb fired body (honeycomb fired body without an oxide layer), and the oxide layer formed on the surface thereof. Accordingly, cracks tend not to occur in the honeycomb structured body.

The silicon carbide fired body used herein refers to a fired body containing 60% by weight or more of silicon carbide. The silicon carbide fired body may contain materials other than silicon carbide, and examples of the materials other than silicon carbide may contain 40% by weight or less of metal silicon, for example. In the case where the silicon carbide fired body contains metal silicon, a silicon-containing oxide layer is formed on the surface of the metal silicon.

When the oxide layer formed on the surface of the honeycomb fired body has a thickness of less than 5 nm, the thickness ofthe oxide layer is too thin. As a result, silicon carbide present inside the oxide layer other than silicon carbide particles having the oxide layer is more likely to be oxidized, and oxidization of silicon carbide facilitates generation of SiO. It is presumed that the generated SiO having a low melting point vaporizes, and the silicon carbide present inside the oxide layer other than silicon carbide particles having the oxide layer corrodes, and cracks are more likely to occur in the honeycomb structured body, leading to deterioration of the thermal shock resistance. When the oxide layer formed on the surface of the honeycomb fired body has a thickness of more than 100 nm, it is presumed that the stress becomes large due to the difference in the coefficients of thermal expansion of the silicon carbide, which is a basic material of the honeycomb fired body (honeycomb fired body without an oxide layer), and the oxide layer formed on the surface thereof, and therefore cracks tend to occur in the honeycomb structured body.

The honeycomb structured body according to claim 2 is exposed to a temperature of 1500°C or more for a predetermined period of time.That is, the above honeycomb structured body is used for the exhaust gas purifying apparatus having a configuration in which PM is burned and thereby removed, for example, when PM is deposited. In this case, when the amount of PM is large, the honeycomb structured body is exposed to a temperature of 1500°C or more. Even in this case, the stress does not become so large due to the differences in the temperatures and in the coefficients of thermal expansion of the silicon carbide, which is a basic material of the honeycomb fired body (honeycomb fired body without an oxide layer), and the oxide layer formed on the surface of the honeycomb fired body. Accordingly, cracks tend not to occur in the honeycomb structured body.

In the honeycomb structured body according to claim 3, a thickness obtained by subtracting a thickness of the oxide layer in the vicinity of one end face of the silicon carbide honeycomb fired body from a thickness of the oxide layer in the vicinity of the other end face thereof is 0.5 to 2 times as large as the thickness of the oxide layer in the vicinity of one end face or the thickness of the oxide layer in the vicinity of the other end face.
The reason why the thickness of the oxide layer is specified by the oxide layer in the vicinity of one end face and in the vicinity of the other end face of the honeycomb structured body is as follows. When the honeycomb structured body is used as a filter or a catalyst supporting carrier, for example, the vicinity of one end face corresponds to an inlet side in which exhaust gases flow, and the vicinity of the other end face corresponds to an exhaust gas outlet side. Whether it corresponds to the exhaust gas inlet side or the exhaust gas outlet side makes a large difference in the temperature of the honeycomb structured body and causes variations in oxidization. Here, the vicinity of the end face refers to a region from the end face to within 20 mm measured.

In the honeycomb structured body according to claim 3, the difference between the thickness of the oxide layer in the vicinity of one end face and the thickness of the oxide layer in the vicinity of the other end face is adjusted to 0.5 to 2 times, as described above. Therefore, the stress resulting from the difference in thermal expansion upon regeneration and the like decreases upon use as a filter or a catalyst supporting carrier. Consequently, cracks tend not to occur in the silicon carbide honeycomb fired body.

The honeycomb structured body according to claim 4 is a honeycomb structured body (hereinafter, also referred to as an "integrated honeycomb structured body") including one piece of the silicon carbide honeycomb fired body, and the honeycomb structured body according to claim 5 is a honeycomb structured body (hereinafter, also referred to as an "aggregated honeycomb structured body) including a ceramic block in which the multiple silicon carbide honeycomb fired bodies are combined with one another with an adhesive layer interposed therebetween.
In the honeycomb structured body according to claim 6, the cells are alternately plugged at either end portion. In addition, in the honeycomb structured body according to claim 7, a peripheral coat layer is formed on a peripheral face of the one piece of the silicon carbide honeycomb fired body or on a peripheral face ofthe ceramic block.

The honeycomb structured body according to claim 8 is used for an exhaust gas purifying apparatus for purifying exhaust gases by filtering a particulate matter discharged from a diesel engine, and the exhaust gas purifying apparatus has a configuration in which particulates containing catalyst that facilitates combustion are accumulated in the honeycomb structured body, and the deposited particulate matter is burned and removed.

The exhaust gas purifying apparatus using the honeycomb structured body according to claim 8 has a configuration in which PM deposited on the honeycomb structured body is heated and thereby burned and removed. However, since a large amount of PM is burned, the temperature of the honeycomb structured body rapidly rises. Therefore, thermal shock occurs in the honeycomb structured body. However, in the honeycomb structured body according to claim 8, the thickness of the oxide layer formed on the surface of the honeycomb fired body is adjusted to 5 to 100 nm. Therefore, the stress does not become large due to the difference in the coefficients of thermal expansion of the silicon carbide, which is a basic material of the honeycomb fired body (honeycomb fired body without an oxide layer), and the oxide layer formed on the surface thereof. Accordingly, cracks tend not to occur in the honeycomb structured body.

An exhaust gas purifying apparatus according to claim 9 includes:a metal container provided with an exhaust gas inlet and an exhaust gas outlet;a honeycomb structured body contained in the metal container; anda holding sealing material interposed between the metal container and the honeycomb structured body, the honeycomb structured body being the honeycomb structured body according to any one of claims 1 to 8 of the present invention. As a result, the stress does not become so large due to the differences in the temperature and in the coefficients of thermal expansion of the silicon carbide, which is a basic material of the honeycomb fired body (honeycomb fired body without an oxide layer), and the oxide layer formed on the surface of the honeycomb fired body. Accordingly, cracks tend not to occur in the honeycomb structured body.

The exhaust gas purifying apparatus according to claim 10 has a configuration in which a particulate matter deposited in the honeycomb structured body is burned and removed.
In the exhaust gas purifying apparatus according to claim 10, since PM deposited on the honeycomb fired body is burned, the temperature of the honeycomb structured body rises rapidly. For this reason, thermal shock occurs in the honeycomb structured body. However, in the honeycomb structured body according to claim 10, the honeycomb structured body is the honeycomb structured body according to any one of claims 1 to 8 of the present invention. Therefore, when soot deposited on the honeycomb structured body is burned, the stress does not become large due to the difference in the coefficients of thermal expansion of the silicon carbide, which is a basic material of the honeycomb structured body (honeycomb fired body without an oxide layer), and the oxide layer formed on the surface thereof. Accordingly, cracks tend not to occur in the honeycomb structured body.

### BRIEF DESCRIPTION OF THE DRAWINGS

Fig. 1 is a perspective view schematically illustrating one example of a honeycomb structured body according to an embodiment of the present invention.
Fig. 2(a) is a perspective view schematically illustrating one example of a honeycomb fired body in the honeycomb structured body according to an embodiment of the present invention, and Fig. 2(b) is an A-A line cross-sectional view of the honeycomb fired body illustrated in Fig. 2(a).
Fig. 3 is an explanatory view schematically illustrating a state in which silicon carbide particles in the honeycomb fired body according to an embodiment of the present invention are combined with one another.
Fig. 4 is an explanatory view schematically illustrating an exhaust gas purifying apparatus according to an embodiment of the present invention.

### MODE FOR CARRYING OUT THE INVENTION

The conventional honeycomb filter described in Patent Document 1 presumably includes a comparatively thick oxide layer. The coefficient of thermal expansion of a silica dioxide-containing oxide layer formed on the surface of the honeycomb filter is different from the coefficient of thermal expansion of the silicon carbide, which is a basic material of the honeycomb filter (honeycomb filter without an oxide layer). This supposedly causes a problem that cracks are more likely to occur in the honeycomb filter due to the difference in the coefficients of thermal expansion of the silicon carbide, which is a basic material of the honeycomb filter, and the oxide layer formed on the surface thereof.

The thermal conductivity of the oxide layer made of silica dioxide and formed on the surface of the honeycomb filter is lower than that of the silicon carbide, which isa basic material of the honeycomb filter. Therefore, if the oxide layer on the surface of the honeycomb filter is thick, heat radiation is insufficient, and the temperature of the basic material of the honeycomb filter further increases, which consequently tends to cause larger thermal stress in the exhaust gas filter. Accordingly, cracks are more likely to occur in the honeycomb filter.

As a result of earnest investigations to solve the above problems, the present inventors have found that when the thickness of the oxide layer formed on the surface of basic material particles of the honeycomb structured body is adjusted in a predetermined range, the stress can be suppressed due to the difference in the coefficients of thermal expansion of the silicon carbide, which is a basic material of the honeycomb structured body (honeycomb structured body without an oxide layer), and the oxide layer formed on the surface thereof and cracks can be prevented in the honeycomb structured body, leading to completion of the present invention.

The thickness of the silicon-containing oxide layer used herein refers to a thickness of the oxide layer before mounting the honeycomb structured body on a vehicle and the like and using the honeycomb structured body.

The honeycomb structured body in such use is exposed to heat, and may be exposed to a temperature of 1500°C or more. The oxide layer formed upon use of the honeycomb structured body has different thicknesses on the exhaust gas inlet side the exhaust gas outlet side of the honeycomb structured body. That is, in general, upon regeneration of the honeycomb structured body, the exhaust gas outlet side of the honeycomb structured body has a high temperature due to combustion heat and heat transfer.

Therefore, it is difficult to control the thickness of the oxide layer such that the oxide layer formed upon use of the honeycomb structured body as a filter or the like is thin on the exhaust gas inlet side and thick on the exhaust gas outlet side.
Accordingly, the honeycomb structured body desirably has an oxide layer with a more uniform thickness when mounted on a vehicle or the like.

In addition, an oxygen concentration (content as oxygen) of the oxide layer formed in the conventional honeycomb structured body disclosed in Patent Document 1 is 1 to 10% by weight, and it is presumed from this oxygen concentration (content asoxygen) that the oxide layer has a thickness exceeding 100 nm.
The oxide layer used herein has a thickness of 5 to 100 nm, different from that of the conventional honeycomb structured body disclosed in Patent Document 1.

### (First embodiment)

Hereinafter, a first embodiment, which is one embodiment of the honeycomb structured body of the present invention, will be described referring to drawings.

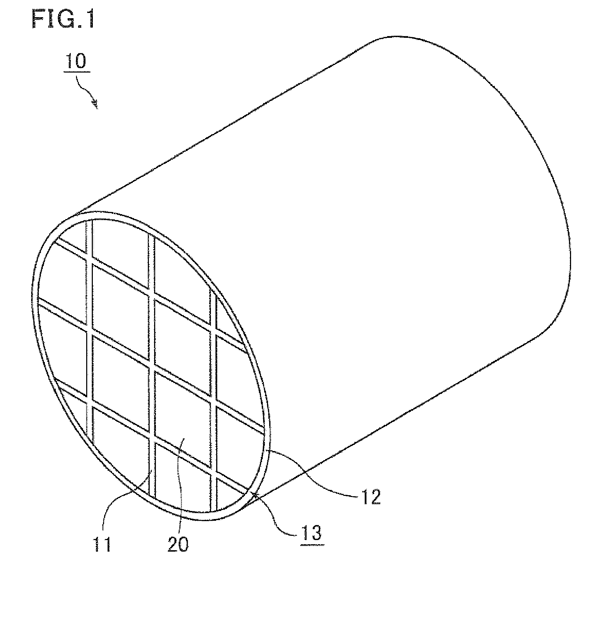

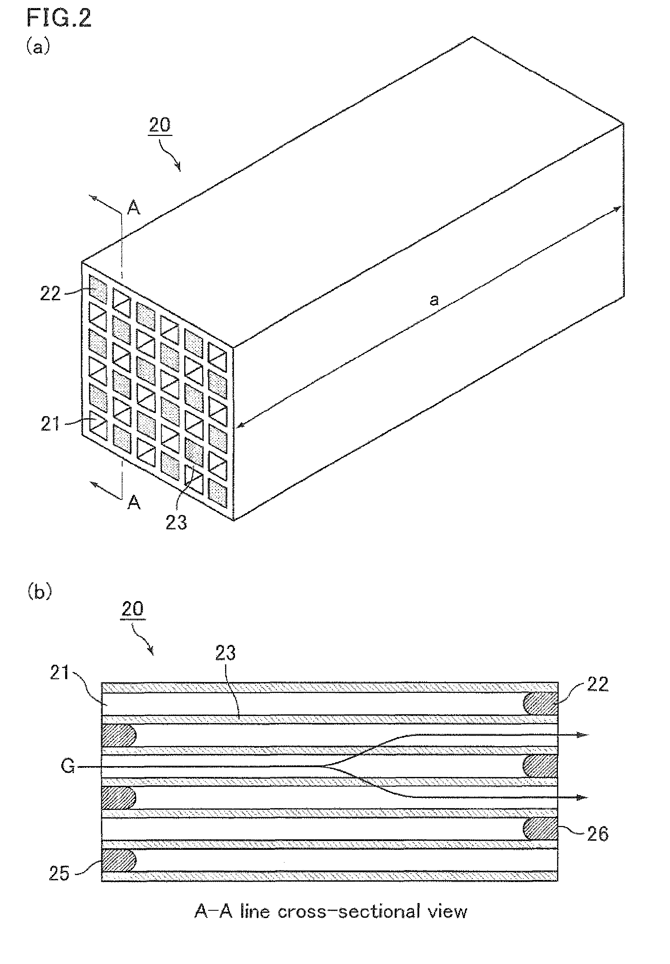

Fig. 1 is a perspective view schematically illustrating one example of a honeycomb structured body according to an embodiment of the present invention. Fig. 2(a) is a perspective view schematically illustrating one example of a honeycomb fired body in the honeycomb structured body according to an embodiment of the present invention, and Fig. 2(b) is an A-A line cross-sectional view of the honeycomb fired body illustrated in Fig. 2(a).

A honeycomb structured body 10 illustrated in Fig. 1 has porous silicon carbide honeycomb fired bodies, multiple honeycomb fired bodies 20 illustrated in Figs. 2(a) and 2(b) are combined with one another by interposing adhesive layers 11 to form a ceramic block 13. Additionally, the ceramic block 13 has a peripheral coat layer 12 formed on its periphery.

In the honeycomb fired body 20 illustrated in Figs. 2(a) and 2(b), a large number of cells 21 are disposed in parallel with one another in a longitudinal direction (direction of an arrow "a" in Fig. 2(a)) with a cell wall 23 interposed therebetween. Either one end portion of each of the cells 21 is plugged with a plug material 22. Therefore, exhaust gases G which have flowed into one of the cells 21 with an opening on one end face 25 surely pass through the cell wall 23 that partitions the cells 21, and flow out from another cell 21 with an opening on the other end face 26. Thus, the cell wall 23 functions as a filter for capturing PM and the like.
Here, among the surfaces of the honeycomb fired body and honeycomb structured body, the surfaces to which the cells are open are termed "end faces" and the surfaces other than the ends faces are termed "side faces".

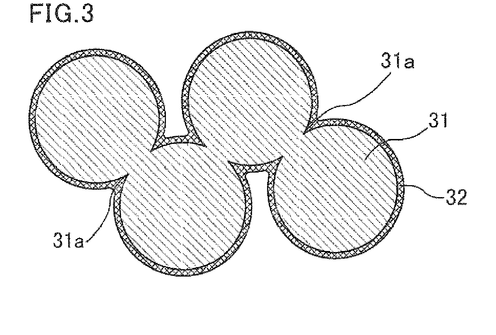

Fig. 3 is an explanatory view schematically illustrating a state in which silicon carbide particles in the honeycomb fired body according to an embodiment of the present invention are combined with one another.
As illustrated in Fig. 3, silicon carbide particles 31 in the honeycomb fired body are combined with one another via a neck 31a, and a silicon-containing oxide layer 32 (silica film) having a thickness of 5 to 100 nm is formed on the surface thereof.

The thickness of the oxide layer formed on the surface of the silicon carbide particles in the honeycomb fired body can be measured by X-ray photoelectron spectroscopy (XPS). The X-ray photoelectron spectroscopy is an analysis method including irradiating a sample surface with an X-ray and measuring produced photoelectron energy with a device, what is called an energy analyzer. The constituent element and electronic state of the sample can be analyzed by the X-ray photoelectron spectroscopy (XPS). The alternation of the X ray photoelectron analysis and ion sputtering makes it possible to find composition variations in a depth direction of the sample.

In the honeycomb structured body according to the embodiments of the present invention, the depth (thickness) of the oxide layer can be measured by analyzing the composition by X-ray photoelectron spectroscopy (XPS) while scraping the surface at a constant speed by ion sputtering. Based on the measurement results by such a measuring method, the silicon-containing oxide layer 32 (silica film) having a thickness of 5 to 100 nm is formed on the surface of the silicon carbide.

The method for manufacturing a honeycomb fired body will be described later in detail. The honeycomb fired body in which the silicon carbide particles 31 are combined with one another via the neck 31a and the like is manufactured through degreasing and firing. An oxide layer is hardly formed on the surface of the silicon carbide particles, which are raw material particles.

That is, in themethod for manufacturing a conventional honeycomb structured body, only an oxide layer having a thickness of less than 5 nm is presumably formed on the surface of the silicon carbide particles in the silicon carbide fired body obtained by the above degreasing and firing. In contrast, in the case where an oxide layer is intentionally formed on the surface of silicon carbide particles as in the conventional honeycomb structured body described in Patent Document 1, a comparatively thick oxide layer having a thickness of more than 100 nm, for example, is formed. In the honeycomb structured body according to the embodiments of the present invention, an oxide layer having a thickness of 5 to 100 nm, different from that of the conventional oxide layer, is formed on the surface of silicon carbide particles.
The lower limit of the thickness of the oxide layer is preferably 5 nm, more preferably 20 nm, and further preferably 35 nm. The upper limit of the thickness of the oxide layer is preferably 100 nm, more preferably 90 nm, and further preferably 70 nm.
The oxide layer more preferably has a thickness of 8.0 to 94.8 nm. In addition, the weight increase rate is preferably 0.06 to 0.49% by weight. It is because the thickness of the oxide layer is controlled at a constant value.

In the honeycomb structured body according to the embodiments of the present invention, a thickness obtained by subtracting a thickness of the oxide layer in the vicinity of one end face of the silicon carbide honeycomb fired body from a thickness of the oxide layer in the vicinity of the other end face thereof is 0.5 to 2 times as large as the thickness of the oxide layer in the vicinity of one end face or the thickness of the oxide layer in the vicinity of the other end face. When the difference between the thickness of the oxide layer in the vicinity of one end face and the thickness of the oxide layer in the vicinity of the other end face is adjusted to 0.5 to 2 times, the stress resulting from the difference in thermal expansion during the regeneration and the like decreases upon use as a filter or a catalyst supporting carrier. Consequently, cracks tend not to occur in the honeycomb fired body. The difference between the thickness of the oxide layer in the vicinity of one end face and the thickness of the oxide layer in the vicinity of the other end face is preferably 0.5 to 1.5 times, and more preferably closer to 1.0 times.

The porosity of the honeycomb fired body in the honeycomb structured body according to the embodiments of the invention is preferably 30% to 70%.
When the porosity of the honeycomb fired body is 30% to 70%, the strength of the honeycomb fired body can be maintained, and the resistance upon exhaust gases passing through a cell wall can be kept low.

On the other hand, when the porosity of the honeycomb fired body is less than 30%, exhaust gases tend not to pass through a cell wall, and tend to cause clogging early. In contrast, when the porosity of the honeycomb fired body exceeds 70%, the honeycomb fired body tends to have lower strength and be easily broken.

The average pore diameter of the honeycomb fired body is preferably 5 to 30 µm.
In the case where the honeycomb structured body including the honeycomb fired body is used as a filter, the pressure loss of the honeycomb structured body increases when the average pore diameter of the honeycomb fired body is less than 5 µm. In contrast, when the average pore diameter of the honeycomb fired body exceeds 30 µm, the capture efficiency of PM of the honeycomb structured body will decrease.
The porosity and the average pore diameter can be measured by mercury porosimetry, for example.

The thickness of the cell wall of the honeycomb fired body is not particularly limited, and is preferably 0.12 to 0.40 mm.
When the thickness of the cell wall of the honeycomb fired body is less than 0.12 mm, the thickness of the cell wall of the honeycomb fired body that supports the honeycomb structure decreases, and the strength of the honeycomb fired body cannot be maintained. When the thickness of the cell wall exceeds 0.40 mm, the pressure loss of the honeycomb structured body tends to increase.

The cell density on a cross section perpendicular to the longitudinal direction of the honeycomb fired body is not particularly limited. A desirable lower limit is 31.0 pcs/cm² (200 pcs/in²), and a desirable upper limit is 93.0 pcs/cm² (600 pcs/in²). A more desirable lower limit is 38.8 pcs/cm² (250 pcs/in²), and a more desirable upper limit is 77.5 pcs/cm² (500 pcs/in²).

Next, the method for manufacturing a honeycomb structured body according to the embodiments of the present invention will be described.
First, a molding process is carried out in which a raw material paste containing ceramic powder and a binder is extrusion-molded to manufacture a honeycomb molded body.

In this process, silicon carbide powder having different average particle sizes as a ceramic raw material, an organic binder, a liquid plasticizer, a lubricant, and water, for example, are mixed to prepare a raw material paste for manufacturing a honeycomb molded body.

Then, the raw material paste is charged in an extrusion molding machine.
Charged in the extrusion molding machine, the raw material paste is extrusion-molded into a honeycomb molded body having a predetermined shape. Then, the extrusion-molded, continuous honeycomb molded body is cut to a predetermined length.

Then, the honeycomb molded body is dried using a microwave drying apparatus, a hot-air drying apparatus, a dielectric drying apparatus, a reduced-pressure drying apparatus, a vacuum drying apparatus, a freeze drying apparatus, and the like.

Next, a plugging process is carried out in which predetermined cells are filled with a plug material paste serving as plugs to plug the cells. The raw material paste can be used as a plug material paste.
Conditions conventionally used in manufacturing honeycomb fired bodies can be applied to conditions for the above cutting, drying, and plugging processes.

Then, a degreasing process is carried out in which an organic matter in the honeycomb molded body is heated and decomposed in a degreasing furnace.
In this degreasing process, the honeycomb molded body is heated to 300°C to 650°C in an oxygen-containing atmosphere.
Subsequently, the degreased honeycomb molded body is transferred to a firing furnace where a firing process is carried out in which the honeycomb molded body is heated to 2000°C to 2200°C and thereby silicon carbide particles in the honeycomb molded body are sintered to manufacture a honeycomb fired body. Through the above processes, a honeycomb fired body made of a silicon carbide sintered body can be manufactured.

Then, a paste for an adhesive layer is applied on the side faces of the obtained honeycomb fired body to form a paste layer for an adhesive layer. Another honeycomb fired body is stacked by interposing the paste layer for an adhesive layer in sequence. This procedure is repeated to manufacture an aggregate of a predetermined number of honeycomb fired bodies bonded together by the paste for an adhesive layer. Here, the paste for an adhesive layer can include an inorganic binder, an organic binder, and at least one of inorganic fibers and inorganic particles.

A ceramic aggregate manufacturing process is carried out in which the aggregate of honeycomb fired bodies is heated to dry and solidify the paste layer for an adhesive layer to yield an adhesive layer and thereby manufacture a ceramic aggregate. Then, a periphery processing is carried out in which the ceramic aggregate is cut on the side faces using a diamond cutter to manufacture a round pillar-shaped ceramic block.

A ceramic block may be manufactured by the method including: manufacturing honeycomb molded bodies having various specific shapes and not requiring periphery processing; firing them and thereby manufacturing honeycomb fired bodies having various shapes; and thereafter combining these honeycomb fired bodies via a paste for an adhesive layer. In this method, a honeycomb structured body having a predetermined shape (for example, a round pillar shape and the like) is completed by only combining these honeycomb fired bodies having these various specific shapes. In this case, the periphery processing is not necessary, and the peripheral coat layer forming process described below is not always necessary.

Then, a peripheral coat layer forming process is carried out in which a paste for a peripheral coat layer is applied around the periphery of the round pillar-shaped ceramic block, dried, and solidified to form a peripheral coat layer.
As the material of the paste for a peripheral coat layer, the same material as the material of the paste for an adhesive layer can be used. The paste for a peripheral coat layer may be made of a material different from that of the paste for an adhesive paste layer.

In the method for manufacturing the honeycomb structured body according to the embodiments of the present invention, s heating process is performed at 700°C to 1100°C in an oxidative atmosphere after the firing process, after the ceramic aggregate manufacturing process, after the peripheral processing, or after the peripheral coat layer forming process. Thereby, an oxide layer having a thickness of 5 to 100 nm is formed on the surface of the silicon carbide particles in the honeycomb fired body.

With respect to the heating conditions in which the oxide layer is formed on the surface of the silicon carbide particles, heating is preferably performed for 3 hours or more in the case of heating at 700°C. As the heating temperature increases, the heating period of time may decrease. Heating is preferably performed, for example, at 1000°C for at least 1 hour, and at 1100°C for at least 30 minutes. Lack of the heating period of time causes the oxide layer to have a thickness of less than 5 nm. Here, heating is preferably performed for 4 hours or less in the case of heating at 1100°C. When heating is performed at 1100°C for more than 4 hours, the thickness of the oxide layer exceeds 100 nm. However, an oxide layer having a thickness of 5 to 100 nm can be formed by heating under the above conditions.

As described above, the thickness of the silicon-containing oxide layer used herein refers to a thickness of the oxide layer before mounting the honeycomb structured body on a vehicle and the like and using the honeycomb structured body.

The oxygen concentration upon heating in which the oxide layer is formed on the surface of the silicon carbide particles is preferably 5 to 21% by volume. An oxygen concentration of less than 5% by volume requires long-time heating, leading to a high cost. In contrast, an oxygen concentration exceeding 21% by volume requires oxygen supply in a heating device, leading to a high cost. In addition, in terms of the cost and work efficiency, the oxide layer is preferably formed using air.

If the periphery processing of the honeycomb structured body is not necessary, heating for forming an oxide layer may be performed after the ceramic aggregate manufacturing process.

Through the above processes, it is possible to manufacture a round pillar-shaped honeycomb structured body in which multiple honeycomb fired bodies each having an oxide layer with a thickness of 5 to 100 nm are bonded together by interposing an adhesive layer to form a ceramic block that has a peripheral coat layer around the periphery.

In the method for manufacturing the honeycomb structured body according to the embodiments of the present invention, the adhesion process may be performed by the method including temporarily fixing each honeycomb fired body into a mold having the same shape as that of a ceramic block (or aggregate of honeycomb fired bodies) to be manufactured and injecting the paste for an adhesive layer into a clearance between each of the honeycomb fired bodies, instead of a method of applying a paste for an adhesive layer to side faces of each honeycomb fired body.

Hereinafter, the effects of the honeycomb structured body of the present embodiment will be listed. (1) In the honeycomb structured body of the present embodiment, since a silicon-containing oxide layer having a thickness of 5 to 100 nm is formed on the surface of the silicon carbide particles in the honeycomb fired body, the ratio of the thickness of the oxide formed on the surface of the particles in the honeycomb fired body to the thickness of the basic material of the honeycomb fired body(honeycomb fired body without an oxide layer)can be kept low. Accordingly, when soot deposited on the honeycomb fired body is burned, the stress resulting from the difference in the coefficients of thermal expansion of the silicon carbide, which is the basic material of the honeycomb fired body(honeycomb fired body without an oxide layer), and the oxide layer formed on the surface thereof does not increase, and cracks tend not to occur in the honeycomb structured body.

(2) In the honeycomb structured body of the present embodiment, the oxide layer having a thickness of 5 to 100 nm is formed. Since the oxide layer having a sufficient thickness is formed, silicon carbide present inside the honeycomb fired body in the honeycomb structured body cannot oxidize easilyeven in the case where the honeycomb structured body is exposed to a high temperature of 1500°C or more. Therefore, the oxide layer tends not to be thick, and a honeycomb fired body having stable properties is manufactured.

### EXAMPLES

The following illustrates examples that more specifically disclose a honeycomb structured body according to the first embodiment of the present invention, and the present invention is not limited to these examples.

### (Example 1)

An amount of 52.8% by weight of a silicon carbide coarse powder having an average particle size of 22 µm and 22.6% by weight of a silicon carbide fine powder having an average particle size of 0.5 µm were mixed. To the resulting mixture, 2.1% by weight of an acrylic resin, 4.6% by weight of an organic binder (methylcellulose), 2.8% by weight of a lubricant (UNILUB, manufactured by NOF Corporation), 1.3% by weight of glycerin, and 13.8% by weight of water were added, and then kneaded to prepare a raw material paste. The obtained raw material paste was extrusion-molded, and an extrusion-molded body was cut to manufacture a raw honeycomb molded body having the same cross-sectional shape as that illustrated in Figs. 2(a) and 2(b) and having cells not plugged. This honeycomb molded body was dried by using a microwave drying apparatus.

Next, predetermined cells of the dried honeycomb molded body were charged with the above-mentioned raw material paste as a plug material paste to plug the cells, and the honeycomb molded body was dried again by using a microwave drying apparatus.

The dried (honeycomb molded body was degreased at 400°C, and then fired at 2200°C in a normal-pressure argon atmosphere for 3 hours so that a honeycomb fired body made of a silicon carbide sintered body was manufactured. The honeycomb fired body had a porosity of 45%, an average pore diameter of 15 µm, measurements of 34.3 mm in height ×34.3 mm in width × 150 mm in length, the number of cells (cell density) of 46.5 pcs/cm² and a thickness of each cell wall of 0.25 mm (10 mil).
The obtained honeycomb fired body was heated at 700°C for 3 hours in an air atmosphere.

A large number of honeycomb fired bodies were bonded to one another by using a heat-resistant paste for an adhesive layer, which include alumina fibers having an average fiber length of 20µm and an average fiber size of 2 µm (30% by weight), silicon carbide particles having an average particle size of 0.6 µm (21% by weight), silica sol (15% by weight, solids content: 30% by weight), carboxymethyl cellulose (5.6% by weight), and water (28.4% by weight). Thereby, an aggregate of honeycomb fired bodies was manufactured.

Further, the aggregate of honeycomb fired bodies was dried at 120°C to manufacture a ceramic aggregate. Subsequently, the ceramic aggregate was cut with a diamond cutter, whereby a round pillar-shaped ceramic block was manufactured.

Next, a paste layer for a peripheral coat layer having a thickness of 0.2 mm was formed around the periphery of the ceramic block by using the aforementioned paste for an adhesive layer. Then, the paste layer for a peripheral coat layer was dried at 120°C to form a peripheral coat layer, whereby a round pillar-shaped honeycomb structure body having a peripheral coat layer around the periphery and measurements of 143.8 mm in diameter × 150 mm in length was manufactured.

### (Examples 2 to 6)

A honeycomb structured body was manufactured as in Example 1, except that a honeycomb fired body was heated under temperature and time conditions shown in Table 1. The treatment conditions of Examples 2 to 6 are 900°C and 10 hours, 1000°C and 3 hours, 1100°C and 1 hour, 1100°C and 3 hours, and 1100°C and 4 hours, respectively.

### (Comparative Example 1)

A honeycomb structured body was manufactured as in Example 1, except that heating was not performed in Comparative Example 1 after a honeycomb fired body was manufactured.

### (Comparative Example 2)

A honeycomb structured body was manufactured as in Example 1, except that after formation of a peripheral coat layer, heating was performed under temperature and time conditions (at 1100°C for 5 hours).

### (Evaluation method)

### (1) Measurement of thickness of oxide layer by X-ray photoelectron spectroscopy (XPS)

One of the heated honeycomb fired bodies (not heated in Comparative Example 1) manufactured in Examples 1 to 6 and Comparative Example 1 and 2 was cut with a diamond cutter into a plate sample for XPS measurement having measurements of 20 mm × 20 mm × 0.25 mm. Then, the thickness of the oxide layer was measured by X-ray photoelectron spectroscopy (XPS) using the sample for XPS measurement.

Quantera SXM manufactured by ULVAC-PHI, Inc. was used as an XPS device, and Monochromated Al-Karays were used as an X-ray source. The measurement conditions were voltage: 15 kV, output: 25 W, and measurement area: 100 µmφ. The ion sputtering conditions were ionic species: Ar⁺, voltage: 1kV (Examples 1 to 4 and Comparative Example 1) or 2 kV (Examples 5 and 6 and Comparative Example 2), sputtering rate (SiO₂ conversion): 1.5 nm/min (Examples 1 to 4 and Comparative Example 1), or 5.4 nm/min (Examples 5 and 6 and Comparative Example 2).
By the XPS device, each sample for XPS measurement in Examples 1 to 6 and Comparative Examples 1 and 2 was subjected to qualitative analysis (wide scan), and to depth direction analysis of C, O, and Si. Based on the results of the depth direction analysis, the thickness of the oxide layer was calculated from the period of time of the strength, which is the middle of the highest strength and the lowest strength of SiO₂ profile, and from the sputtering rate (SiO₂ conversion) of each sample for XPS measurement.
Table 1 shows the measurement results of the thicknesses of the oxide layers in Examples 1 to 6 and Comparative Examples 1 and 2 by X-ray photoelectron spectroscopy (XPS). The thicknesses of the oxide layers in Examples 1 to 6 and Comparative Examples 1 and 2 were 8.0 nm, 26.0 nm, 36.0 nm, 45.0 nm, 64.4 nm, 94.8 nm, ≤4 nm, and 108.5 nm, respectively.

### (2) Thermal shock test of honeycomb structured body

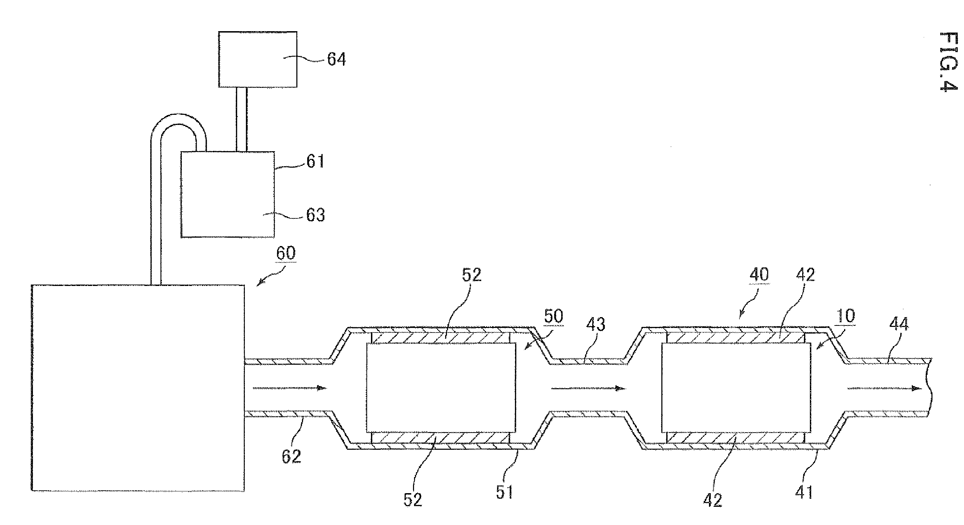

By using the honeycomb structured body manufactured in each of Examples 1 to 6 and Comparative Examples 1 and 2, an apparatus was assembled in which an oxidation catalyst 50 and an exhaust gas purifying apparatus 40 are connected to an exhaust pipe 62 of a 2-1 common-rail-type diesel engine 60 illustrated in Fig. 4. Then, a thermal shock test was performed by combustion of PM deposited on the honeycomb structured body. Subsequently, the presence of cracks in the silicon carbide honeycomb fired body in the honeycomb structured body was observed visually and with a microscope.

Specifically, the engine was driven at a rotational frequency of 3000 min⁻¹ and a torque of 50 Nm to capture 12 g/L of PM in the honeycomb structured body. Thereafter, the engine was driven at full load at a rotational frequency of 4000 min⁻¹ to raise the exhaust gas temperature, and PM deposited in the honeycomb structured body was forcibly burned. Then, the presence of cracks in the honeycomb fired body was observed with naked eyes and a scanning electron microscope (SEM). In each of Examples 1 to 6 and Comparative Example 1 and 2, the highest temperature of each of the honeycomb structured bodies was over 1500°C. In each of Examples 1 to 6 and Comparative Example 1 and 2, the water vapor content of exhaust gases discharged from the diesel engine was 2% by volume

A cerium compound was added to fuel so that the fuel of the diesel engine contained 10 ppm of the cerium compound as a catalyst, and a thermal shock test (crack evaluation) of the honeycomb structured body was performed. Table 1 shows the results. Cracks did not occur in Examples 1 to 6 whilecracks occurred in Comparative Examples 1 and 2.

### (3) Determination of weight increase rate

The honeycomb fired bodies manufactured in Examples 1 to 6 and Comparative Example 2 were heated under the same conditions as in Examples 1 to 6 and Comparative Example 2, the weights before and after heating were measured, and thereby the weight increase rates were obtained. Here, the weight increase rates(%)areeach represented by the following formula (1).
Weight increase rate (%) = (weight of the honeycomb fired body after heating - weight of the honeycomb fired body before heating) × 100/weight of the honeycomb fired body before heating ... (1)
Table 1 shows the results. The weight increase rates in Examples 1 to 6 and Comparative Example 1 and 2 were 0. 06% by weight, 0.20% by weight, 0.25% by weight, 0.30% by weight, 0.33% by weight, 0.49% by weight, 0% by weight, and 0.56% by weight, respectively. In Comparative Example 1 in which (honeycomb fired bodies were not heated, the weight increase rates were represented as 0% by weight.

**[Table 1]**

| | Heating conditions | | Weight increase rate (% by weight) | Thickness of oxide layer (nm) | Visual evaluation of cracks |
|---|---|---|---|---|---|
| | Temperature (°C) | Time (hr) | | | |
| Example 1 | 700 | 3 | 0.06 | 8.0 | Absent |
| Examples 2 | 900 | 10 | 0.20 | 26.0 | Absent |
| Example 3 | 1000 | 3 | 0.25 | 36.0 | Absent |
| Examples 4 | 1100 | 1 | 0.30 | 45.0 | Absent |
| Examples 5 | 1100 | 3 | 0.33 | 64.4 | Absent |
| Example 6 | 1100 | 4 | 0.49 | 94.8 | Absent |
| Comparative Example 1 | None | | 0 | ≤4 nm | Present |
| Comparative Example 2 | 1100 | 5 | 0.56 | 108.5 | Present |

As shown in Table 1, in Examples 1 to 6 in each of which the honeycomb structured body was manufactured using the honeycomb fired body including an oxide layer having a thickness of 8.0 to 94.8 nm, cracks were not observed even in the case where the 12 g/L of PM was deposited in the obtained honeycomb structured body, and then the honeycomb structured body was burned so as to have a temperature of more than 1500°C and thermally shocked. In contrast, cracks were observed by the above thermal shock in Comparative Example 1 not including heating (the thickness of the oxide layer was measured to be 4 nm or less) and Comparative Example 2 in which the thickness of the oxide layer was 108.5 nm, which exceeded 100 nm. The results show that the oxide layer preferably has a thickness of 5 to 100 nm, and more preferably 8.9 to 94.8 nm.

### (Second embodiment)

Hereinafter, a second embodiment, which is one embodiment of the exhaust gas purifying apparatus of the present invention, will be described referring to drawings.

Fig. 4 is an explanatory view schematically illustrating an exhaust gas purifying apparatus according to an embodiment of the present invention.
As illustrated in Fig. 4, the exhaust gas purifying apparatus 40 according to the present embodiment includes: a metal container 41 provided with an exhaust gas inlet 43 and an exhaust gas outlet 44; and a honeycomb filter consisting of the honeycomb structured body 10 housed by interposing a holding sealing material 42 in the metal container 41. The honeycomb structured body 10 described in the first embodiment of the present invention is used as the honeycomb filter.

On a region closer to an exhaust gas inlet side than the exhaust gas purifying apparatus 40, the oxidation catalyst 50 is housed in another metal container 51 by interposing a holding sealing material 52. The metal container 51 containing the oxidation catalyst 50 is connected to the exhaust pipe 62 of the diesel engine 60, and the oxidation catalyst 50 and the exhaust gas purifying apparatus 40 purify exhaust gases discharged from the diesel engine 60.

This diesel engine 60, not illustrated, employs a common-rail type, and is configured to enable a catalyst 64 to be added to fuel 63 in a fuel container 61.

In vehicles provided with the exhaust gas purifying apparatus 40, the oxidation catalyst 50, and the diesel engine 60, PM is removed by the following methods when a predetermined amount of PM is deposited in the honeycomb filter.

First, the catalyst 64 of a cerium compound and the like is added to the fuel 63and mixed in exhaust gases discharged from the diesel engine 60. Then, the temperature of exhaust gases was raised by post injection. In the present embodiment, since a catalyst supporting carrier 50 is disposed on a region closer to the engine than the exhaust gas purifying apparatus 40, the exhaust gases having an increased temperature passes through the inside of the oxidation catalyst 50. As a result, it is possible to further increase the temperature of the exhaust gases while burning unburned fuel and removing HC and CO.

Since the catalyst 64 is mixed in the exhaust gases, the combustion initiation temperature of PM decreases, leading to combustion and removal of PM deposited in the honeycomb filter.

The holding sealing materials 42 and 52 used in the present embodiment hold and fix the honeycomb structured body 10 and the catalyst supporting carrier 50 in the metal containers 41 and 51, respectively, and function as a matheat insulating material to incubate the honeycomb structured body 10 and the catalyst supporting carrier 50 in use.

Hereinafter, the effects of the exhaust gas purifying apparatus of the present embodiment will be listed.
(3) The exhaust gas purifying apparatus of the present embodiment is suitably used as an exhaust gas purifying apparatus having a configuration in which catalyst is added to fuel to decrease the combustion initiation temperature of the particulate matter, and the particulate matter deposited in the honeycomb filter is burned and removed. This is presumably for the following reasons.
That is, in the case where the honeycomb structured body according to the present embodiment is employed for the exhaust gas purifying apparatus having a configuration in which deposited PM is removed by this method, a large amount of PM can be accumulated in the honeycomb structured body. In this case, the honeycomb filter (honeycomb structured body) may reach a temperature of 1500°C or more. However, even in the case where such a honeycomb filter (honeycomb structured body) reaches a temperature of more than 1500°C, the oxide layer having a thickness of 5 to 100 nm is formed on the surface of the silicon carbide in the honeycomb structured body. Therefore, the stress does not become large due to the difference in the coefficients of thermal expansion of the silicon carbide, which is a basic material of the honeycomb fired body (honeycomb fired body without an oxide layer), and the oxide layer formed on the surface thereof.Accordingly, cracks tend not to occur in the honeycomb structured body.

### (Other embodiments)

The cross-sectional shape of the honeycomb structured body of the present invention is not limited to a round shape, and may be an elliptical shape, a racetrack shape, or the like, for example.

The honeycomb structured body according to the present invention may include a honeycomb fired body in which silicon carbide particles are combined with metal silicon particles. In this case, the content rate of the metal silicon in the entire honeycomb fired body is preferably 40% by weight or less. In the present invention, heating is performed in order to form an oxide layer on the surface of the honeycomb fired body having the above configuration. This heating allows an oxide layer to be formed also on the surface of the metal silicon. Accordingly, also when exposed to a temperature exceeding the melting temperature of the metal silicon, the above effects of the present invention are exerted without the collapse of the structure of the honeycomb fired body.

The honeycomb structured body according to the first embodiment of the present invention has a configuration in which a peripheral coat layer is formed in the periphery of the ceramic block in which multiple silicon carbide honeycomb fired bodies are combined with one another by interposing an adhesive layer. The configuration of the honeycomb structured body is not limited to the above configuration.

The honeycomb structured body of the present invention may have one piece of the silicon carbide honeycomb fired body. Also in this case, the honeycomb structured body exerts the same effects as the honeycomb structured body according to the first embodiment of the present invention.

The honeycomb structured body of the present invention may support catalyst for purifying and/or converting exhaust gas (for example, oxide catalyst).

For supporting catalyst, the catalyst supported is preferably a noble metal such as platinum, palladium, or rhodium, for example. More preferable among these is platinum. Examples of other catalysts include alkaline metals such as potassium and sodium, and alkaline earth metals such as barium.

Further, examples of the catalyst include metal oxides such as CeO₂, ZrO₂, FeO₂, Fe₂O₃, CuO, CuO₂, Mn₂O₃ and MnO, composite oxides represented by the composition formula AₙB₁₋ₙCO₃ (in the formula, A is La, Nd, Sm, Eu, Gd or Y, B is an alkali metal or alkali-earth metal, and C is Mn, Co, Fe or Ni, with n being set in a range from 0 ≤ n ≤ 1), and the like.
These catalysts may be used alone or in combination of two or more.

For supporting catalyst, the cell walls of the honeycomb structured body can have a catalyst supporting layer for highly dispersed catalyst. The material of the catalyst supporting layer is desirably a material having a large specific surface area for supporting the catalyst in a highly dispersed manner, including oxide ceramics such as alumina, titania, zirconia, and silica.
These materials may be used alone or in combination of two or more.

### EXPLANATION OF SYMBOLS

- 10: Honeycomb structured body
- 11: Adhesive layer
- 12: Peripheral coat layer
- 13: Ceramic block
- 20: Honeycomb fired body
- 21: Cell
- 22: Plug material
- 23: Cell wall
- 31: Silicon carbide particle
- 31a: Neck
- 32: Oxide layer
- 40: Exhaust gas purifying apparatus
- 41, 51: Metal container
- 42, 52: Holding sealing material
- 43: Exhaust gas inlet
- 44: Exhaust gas outlet
- 50: Oxidation catalyst
- 60: Diesel engine
- 61: Fuel container
- 62: Exhaust pipe
- 63: Fuel
- 64: Catalyst

## Claims

1. A honeycomb structured body comprising:
a porous silicon carbide honeycomb fired body in which a large number of cells are longitudinally disposed in parallel with one another with a cell wall interposed therebetween,
wherein
a silicon-containing oxide layer is formed on a surface of silicon carbide particles in the silicon carbide honeycomb fired body, and
the oxide layer has a thickness of 5 to 100 nm when measured with an X-ray photoelectron spectroscopy (XPS).

2. The honeycomb structured body according to claim 1, which is exposed to a temperature of 1500°C or more for a predetermined period of time.

3. The honeycomb structured body according to claim 1 or 2,
wherein
a thickness obtained by subtracting a thickness of the oxide layer in the vicinity of one end face of the silicon carbide honeycomb fired body from a thickness of the oxide layer in the vicinity of the other end face thereof is 0.5 to 2 times as large as the thickness of the oxide layer in the vicinity of one end face or the thickness of the oxide layer in the vicinity of the other end face.

4. The honeycomb structured body according to any one of claims 1 to 3,
wherein
the honeycomb structured body has one piece of the silicon carbide honeycomb fired body.

5. The honeycomb structured body according to any one of claims 1 to 3,
wherein
the honeycomb structured body comprises a ceramic block in which the multiple silicon carbide honeycomb fired bodies are combined with one another with an adhesive layer interposed therebetween.

6. The honeycomb structured body according to any one of claims 1 to 5,
wherein
the cells are alternately plugged at either end portion.

7. The honeycomb structured body according to any one of claims 4 to 6, wherein
a peripheral coat layer is formed on a peripheral face of the one piece of the silicon carbide honeycomb fired body or on a peripheral face of the ceramic block.

8. The honeycomb structured body according to any one of claims 1 to 7,
wherein
the honeycomb structured body is used for an exhaust gas purifying apparatus for purifying exhaust gas by filtering a particulate matter discharged from a diesel engine, and
the exhaust gas purifying apparatus has a configuration in which particulates containing a catalyst that facilitates combustion are accumulated in the honeycomb structured body, and the deposited particulate matter is burned and removed.

9. An exhaust gas purifying apparatus comprising:
a metal container provided with an exhaust gas inlet and an exhaust gas outlet;
a honeycomb structured body contained in the metal container; and
a holding sealing material interposed between the metal container and the honeycomb structured body, the honeycomb structured body being the honeycomb structured body according to any one of claims 1 to 8.

10. The exhaust gas purifying apparatus according to claim 9,
wherein
the exhaust gas purifying apparatus has a configuration in which a particulate matter deposited in the honeycomb structured body is burned and removed.
